# EUROPÄISCHE PATENTANMELDUNG

(11) **EP 0 952 749 A2**
(43) Veröffentlichungstag der Anmeldung: **27.10.1999**
(21) Anmeldenummer: 99107684.5
(22) Anmeldetag: 16.04.1999
(51) Int. Cl.: H04Q 7/38

(54) **Dezentral gesteuertes Handover mobiler Endeinrichtungen**

(30) Priorität: 16.04.1998 DE 19816935
(71) Anmelder: SIEMENS AKTIENGESELLSCHAFT, 80333 München (DE)
(72) Erfinder: Jahn, Alfred, 81373 München (DE)

(57) **Zusammenfassung**

Zum unterbrechungsfreien Wechsel einer von einer Vermittlungsstation (V) über eine erste Basisstation (B1) zu einer mobilen Endeinrichtung (E) aufgebauten Verbindung zum Verlauf über eine zweite Basisstation (B2), wird durch eine Basisstation ein auch für drahtgebundene Kommunikation vorgesehenes Leistungsmerkmal der Vermittlungsstation (V), z.B. eine Dreierkonferenzschaltung, aktiviert, das ein paralleles Übertragen der im Rahmen der Verbindung der mobilen Endeinrichtung (E) zu übermittelnden Daten (DAT) an beide Basisstationen (B1, B2) veranlaßt. Sobald die Daten (DAT) bei beiden Basisstationen (B1, B2) vorliegen kann die mobile Endeinrichtung (E) den Datenaustausch mit der Vermittlungsstation (V) von der ersten Basisstation (B1) unterbrechungsfrei auf die zweite Basisstation (B2) verlagern. Anschließend wird die Datenübertragung von der Vermittlungsstation (V) zur ersten Basisstation (B1) beendet.

## Beschreibung

Bei vielen Kommunikationssystemen werden Endeinrichtungen, die unterschiedlichen Zwecken dienen können, wie z.B. einem Übertragen von Sprach-, Video-, Fax-, Datei-, Programm- und/oder Meßdaten, in zunehmendem Maße drahtlos angekoppelt. Eine Verbindung zu derartigen mobilen Endeinrichtungen wird üblicherweise über sogenannte Basisstationen aufgebaut, die über Luftschnittstellen mit den mobilen Endeinrichtungen zu koppeln sind. Im die vorliegende Erfindung betreffenden Fall sind die Basisstationen an eine Vermittlungsstation gekoppelt, über die Verbindungen zu den mobilen Endeinrichtungen vermittelt werden. Die Vermittlungsstation kann dabei an ein externes Kommunikationsnetz angeschlossen sein, wodurch auch Verbindungen zwischen den mobilen Endeinrichtungen und externen Endeinrichtungen aufgebaut werden können.

Der Bereich um eine Basisstation, in dem eine drahtlose Verbindung mit einer mobilen Endeinrichtung über diese Basisstation in vorgegebener Qualität möglich ist, wird auch als Funkzelle dieser Basisstation bezeichnet. Um einen größeren Bereich mit Verbindungsmöglichkeiten zu versorgen, sind in der Regel mehrere Basisstationen so über den zu versorgenden Bereich verteilt, daß ihre Funkzellen ein flächendeckendes bzw. raumfüllendes Netz bilden. Je nach räumlicher Ausdehnung der Funkzellen klassifiziert man diese als Pico-, Mikro- oder Makro-Funkzellen. Die vorliegende Erfindung betrifft nun den Fall, daß eine mobile Endeinrichtung, die über eine erste Basisstation mit der Vermittlungsstation verbunden ist, die Funkzelle dieser ersten Basisstation verläßt und in die Funkzelle einer benachbarten Basisstation gelangt. In diesem Fall ist der Verlauf der bestehenden Verbindung von der ersten Basisstation auf die benachbarte Basisstation zu verlagern. Ein derartiger Wechsel des Verbindungsverlaufs wird häufig auch als ,,connection handover" bezeichnet. Ein wesentliches Problem besteht dabei darin, während des Wechsels des Verbindungsverlaufs eine verlustfreie Datenübertragung im Rahmen der Verbindung zu gewährleisten und eine Unterbrechung der Datenübertragung nach Möglichkeit zu vermeiden. Ein unterbrechungsfreier Wechsel der Verbindungsführung wird häufig auch als "seamless handover" bezeichnet, wobei als unterbrechungsfrei ein für einen Benutzer nicht wahrnehmbarer Wechsel verstanden wird.

Bei bekannten Verfahren wird ein Wechsel des Verbindungsverlaufs von einer dazu vorgesehenen zentralen Funkvermittlungsbaugruppe, die als Schnittstelle zwischen Basisstationen und Vermittlungsstation fungiert, gesteuert. Hierbei müssen die an der Verbindungsübergabe beteiligten Basisstationen Informationen über einen Wechsel der Funkzelle zusammen mit Informationen zur Verbindungsverwaltung mit der zentralen Funkvermittlungsbaugruppe austauschen, die daraufhin ein Umleiten der zur mobilen Endeinrichtung zu übertragenden Daten von der die Verbindung abgebenden zu der die Verbindung übernehmenden Basisstation bewirkt. Anordnungen und Verfahren dieser Art sind beispielsweise aus "Cordless Telecommunications in Europe" von Wally H. W. Tuttlebee (Ed.), Springer-Verlag London, 1990, Seiten 43 bis 48 und 273 bis 275 bekannt.

Als Vermittlungsstationen werden häufig für drahtgebundene Kommunikation konzipierte Geräte eingesetzt. In diesen Fällen wird die zentrale Funkvermittlungsbaugruppe seitens der Vermittlungsstation wie eine Gruppe von drahtgebundenen Endeinrichtungen angesteuert. Diese Ansteuerung muß von der zentralen Funkvermittlungsbaugruppe in eine für die Verwaltung von drahtlosen Kommunikationseinrichtungen geeignete Ansteuerung auf seiten der angeschlossenen Basisstationen umgesetzt werden. Insbesondere muß die zentrale Funkvermittlungsbaugruppe alle für eine drahtlose Kommunikation spezifischen Vorgänge, wie z.B. die mit einem Wechsel der Funkzelle verbundenen Vorgänge, selbständig steuern bzw. verwalten. Die dazu notwendige Funktionalität ist im allgemeinen sehr umfangreich und entsprechende zentrale Funkvermittlungsbaugruppen deshalb verhältnismäßig teuer.

Aufgabe der vorliegenden Erfindung ist es, ein Verfahren zum Wechsel einer von einer mobilen Endeinrichtung über eine erste Basisstation zu einer Vermittlungsstation aufgebauten Verbindung zum Verlauf über eine zweite Basisstation anzugeben, das ohne zwischen Basisstationen und Vermittlungsstation geschaltete zentrale Funkvermittlungsbaugruppe auskommt.

Gelöst wird diese Aufgabe erfindungsgemäß durch ein Verfahren mit den Merkmalen des Patentanspruchs 1.

Vorteilhafte Ausführungsformen der Erfindung sind in den Unteransprüchen angegeben.

Bei einem erfindungsgemäßen Verfahren wird bei einer über eine erste Basisstation geführten Verbindung zwischen einer mobilen Endeinrichtung und der Vermittlungsstation ein Wechsel der Verbindungsführung veranlaßt, wenn von der mobilen Endeinrichtung oder der ersten Basisstation erkannt wird, daß die drahtlose Datenübertragung zwischen mobiler Endeinrichtung und erster Basisstation nicht mehr einem vorgegebenen Qualitätskriterium entspricht und sich eine zweite Basisstation in Funkreichweite der mobilen Endeinrichtung befindet, zu der eine Datenübertragung in vorgegebener Qualität möglich ist. Ein Wechsel der Verbindungsführung kann aber auch beispielsweise bei einer Überlastung der ersten Basisstation ausgelöst werden.

Zum Wechseln der Verbindungsführung wird der Vermittlungsstation zunächst von einer Basisstation, vorzugsweise von einer der am Wechsel beteiligten Basisstationen, ein Steuersignal, z.B. gemäß der ETSI-Standard-Definition für Signalisierung QSIG für private Netze bzw. DSS1 für öffentliche Netze oder anderen ITU-T-Standard-Definitionen, übermittelt. Durch das Steuersignal wird daraufhin mindestens ein auch für drahtgebundene Kommunikation vorgesehenes Leistungsmerkmal der Vermittlungsstation zum parallelen Übertragen von Daten an mehrere Übertragungsziele aktiviert. Vorzugsweise kann ein für drahtgebundene Kommunikation standardisiertes Leitungsmerkmal, wie z.B. eine Dreierkonferenzschaltung (3PTY), eine Punkt-zu-Mehrpunkt-Verbindung von der Vermittlungsstation zu den beiden Basisstationen oder andere Leistungsmerkmale gemäß ETSI-Standard für ISDN, genutzt werden. Das Leistungsmerkmal bzw. die Kombination von Leistungsmerkmalen wird dabei in einer Weise aktiviert, daß die der mobilen Endeinrichtung im Rahmen der Verbindung zu übermittelnden Daten von der Vermittlungsstation, außer an die erste Basisstation, auch an die zweite Basisstation übertragen werden.

Nachdem die der mobilen Endeinrichtung zu übermittelnden Daten bei beiden Basisstationen vorliegen, beendet die mobile Endeinrichtung einen über die erste Basisstation verlaufenden Datenaustausch mit der Vermittlungsstation, um diesen Datenaustausch mit der Vermittlungsstation über die zweite Basisstation fortzusetzen. Da die an die mobile Endeinrichtung zu übermittelnden Daten bei beiden Basisstationen parallel vorliegen, kann üblicherweise eine Unterbrechung des Datenaustausches vermieden werden.

Im Anschluß daran wird der Vermittlungsstation von einer Basisstation, vorzugsweise von einer der am Wechsel der Verbindungsführung beteiligten Basisstationen, ein weiteres Steuersignal, z.B. gemäß der ETSI-Standard-Definition für Signalisierung QSIG für private Netze bzw. DSS1 für öffentliche Netze oder anderen ITU-T-Standard-Definitionen, übermittelt. Durch dieses Steuersignal wird die Datenübertragung von der Vermittlungsstation an die erste Basisstation beendet. Zum Beenden dieser Datenübertragung kann vorzugsweise ein für drahtgebundene Kommunikation standardisiertes Leistungsmerkmal, z.B. gemäß ETSI-Standard für ISDN, genutzt werden. Falls vorher durch die Aktivierung des ersten Leistungsmerkmals eine Dreierkonferenzschaltung eingerichtet wurde, kann die Datenübertragung an die erste Basisstation beendet werden, indem die erste Basisstation aus der Dreierkonferenz herausgeschaltet wird.

Durch die Nutzung von auch für drahtgebundene Kommunikation vorgesehenen Leistungsmerkmalen können zur Realisierung eines erfindungsgemäßen Verfahrens auch für drahtgebundene Kommunikation konzipierte Vermittlungsstationen unverändert und damit kostengünstig eingesetzt werden. Ebenso sind zur Durchführung eines erfindungsgemäßen Verfahrens keine Veränderungen an mobilen Endeinrichtungen notwendig, so daß bereits vorhandene Endeinrichtungen weiter verwendet werden können. Um die zur Realisierung eines erfindungsgemäßen Verfahrens erforderlichen Steuerfunktionen auszuführen, müssen nur die Basisstationen geringfügig modifiziert werden. Die Basisstationen können weiterhin ohne Zwischenschaltung aufwendiger Funkvermittlungsbaugruppen direkt an die Vermittlungsstation angeschlossen werden.

Da ein unterbrechungsfreier Wechsel der Verbindungsführung bei einem erfindungsgemäßen Verfahren nur geringen Aufwand erfordert, können solche Wechsel auch in verhältnismäßig kurzen Zeitabständen aufeinanderfolgen, was sich insbesondere in Funknetzen mit kleineren Funkzellen (Pico- und Micro-Funkzellen) als Vorteil erweist.

Ein erfindungsgemäßes Verfahren läßt sich mit Luftschnittstellen gemäß unterschiedlicher Standards zwischen mobiler Endeinrichtung und Basisstationen realisieren, wobei auch mehrere Standards kombinierbar sind. Vorteilhafte Ausführungsformen ergeben sich insbesondere mit Luftschnittstellen gemäß den ETSI-Standard-Definitionen DECT (Digital Enhanced Cordless Telecommunications), DCS (Digital Cellular System) oder GSM (Global System for Mobile Communication) oder einer Luftschnittstelle gemäß der zur Standardisierung vorgeschlagenen UMTS-Definition (Universal Mobile Telecommunication System); ferner mit Luftschnittstellen gemäß der ARI-Standard-Definition PHS(Personal Handyphone System).

Nach einer vorteilhaften Weiterbildung des erfindungsgemäßen Verfahrens können erste und zweite Basisstation Signale austauschen, die zur zeitlichen Synchronisierung der Basisstationen verwendet werden. Eine zeitliche Synchronisierung der Basisstationen begünstigt einen unterbrechungsfreien Wechsel der Verbindungsführung. Falls die Datenübertragung zwischen mobiler Endeinrichtung und Basisstationen auf einem TDMA-Zeitmultiplexverfahren (time division multiple access) beruht, ist für einen unterbrechungsfreien Wechsel der Verbindungsführung eine zeitliche Synchronisierung der beteiligten Basisstationen sogar zwingend notwendig.

Gemäß einer weiteren vorteilhaften Weiterbildung tauschen Basisstationen untereinander Daten über eine Systemkennung der Basisstationen, z.B. eine sogenannte EIC-Kennung, aus. Auf diese Weise kann sichergestellt werden, daß die Basisstationen von einer mobilen Endeinrichtung als zu einem gemeinsamen Kommunikationssystem gehörig erkannt werden können, wodurch die Administration des Kommunikationssystems insbesondere während des Handover-Vorgangs, vereinfacht wird.

Weiterhin besteht die Möglichkeit, daß ein Datenaustausch zwischen einer Basisstation und einer Vermittlungsstation über mindestens eine andere an die Vermittlungsstation gekoppelte Basisstation geführt wird. In einem solchen Fall benötigt die erstgenannte Basisstation zur Integration in das Kommunikationssystem keinen direkten Anschluß an die Vermittlungsstation, sondern nur Kontakt zu einer anderen Basisstation. Dies erfordert häufig weniger Aufwand.

Eine weitere vorteilhafte Weiterbildung der Erfindung sieht vor, daß ein Austausch von Daten und/oder Signalen zwischen Basisstationen drahtlos erfolgt. Zur drahtlosen Kommunikation zwischen den Basisstationen können vorzugsweise die schon in den Basisstationen vorhandenen Sende- und Empfangseinrichtungen genutzt werden. Als Übertragungsprotokoll kann dabei das für den Datenaustausch mit den mobilen Endeinrichtungen vorgesehene Übertragungsprotokoll verwendet werden. Auf diese Weise kann eine Basisstation drahtlos in das Kommunikationssystem integriert werden. Eine Basisstation, über die eine weitere Basisstation drahtlos an die Vermittlungsstation angekoppelt wird, wird häufig auch als Repeater bezeichnet.

Die Erfindung wird nachfolgend anhand eines Ausführungsbeispiels unter Bezugnahme auf die Zeichnung näher erläutert.

Dabei zeigen

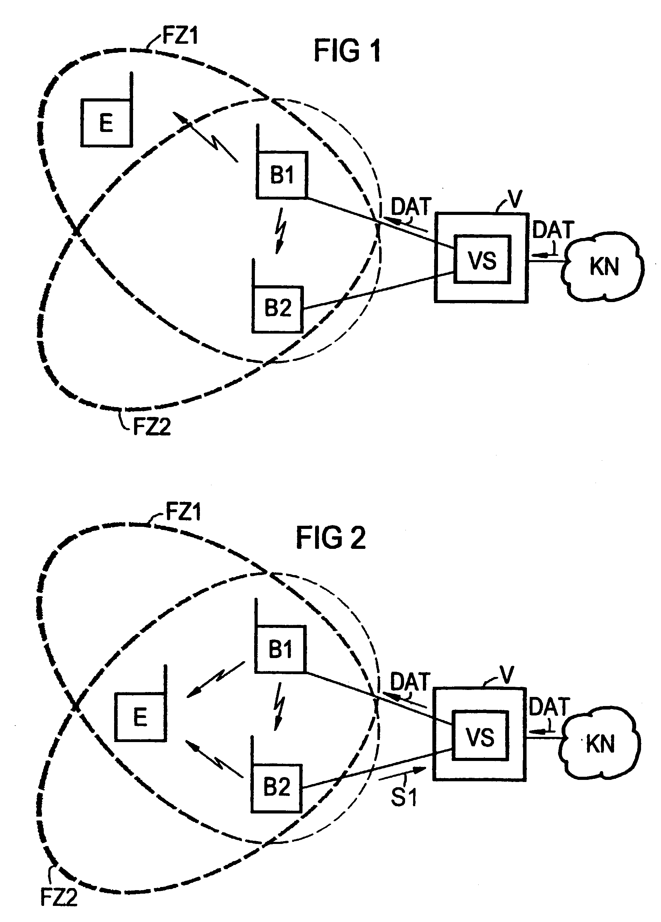

Fig 1 bis 4 in schematischer Darstellung ein Kommunikationssystem mit einer mobilen Endeinrichtung, die über Basisstationen mit einer Vermittlungsstation verbunden ist, mit unterschiedlichen Verbindungswegen.

In den Figuren 1 bis 4 ist jeweils ein Kommunikationssystem dargestellt, das sich aus einer an ein Kommunikationsnetz KN gekoppelten Vermittlungsstation V mit Vermittlungssteuerung VS, zwei daran angeschlossenen Basisstationen B1 und B2 mit zugehörigen Funkzellen FZ1 bzw. FZ2 und einer mobilen Endeinrichtung E, z.B. einem Schnurlos-Telefon nach DECT-Standard oder einem Mobiltelefon nach GSM-Standard, zusammensetzt. Die mobile Endeinrichtung E ist jeweils drahtlos über wechselnde Basisstationen mit der Vermittlungsstation V verbunden, über die die Verbindung in das Kommunikationsnetz KN führt. Eine drahtlose Ankopplung ist jeweils durch einen stilisierten Blitz angedeutet. Zur Realisierung eines erfindungsgemäßen Verfahrens genügt es, eine kostengünstige, für drahtgebundene Kommunikationssysteme konzipierte Vermittlungsstation V zu verwenden, die auch nur für drahtgebundene Kommunikation standardisierte Leistungsmerkmale aufweist. Beide Basisstationen B1 und B2 liegen in der Funkzelle der jeweils anderen Basisstation, so daß diese Basisstationen untereinander, d.h. ohne Umweg über die Vermittlungsstation V oder die Endeinrichtung E, drahtlos, z.B. über eine DECT-Luftschnittstelle, Daten und/oder Signale austauschen können. In diesem Ausführungsbeispiel werden von den Basisstationen Signale ausgetauscht, die eine genaue zeitliche Synchronisierung beider Basisstationen B1 und B2 ermöglichen. Beim Handover-Vorgang können so beide Basisstationen zur mobilen Endeinrichtung synchronisiert werden, was eine Voraussetzung für ein unterbrechungsfreies Handover darstellt. Daneben wird Information darüber ausgetauscht, welche mobile Endeinrichtung welcher Basisstation jeweils aktuell zugeordnet ist.

Die Anzahl der an die Vermittlungsstation V angeschlossenen Basisstationen und die Anzahl, Form und Anordnung der Funkzellen ist lediglich als Idealisierung anzusehen, die der Vereinfachung der nachfolgenden Beschreibung dient.

In Fig 1 befindet sich die mobile Endeinrichtung E in der Funkzelle FZ1 der Basisstation B1, aber noch außerhalb der Funkzelle FZ2 der Basisstation B2. Im Rahmen der über die Basisstation Bl aufgebauten Verbindung in das Kommunikationsnetz KN, werden der mobilen Endeinrichtung E Daten DAT aus dem Kommunikationsnetz KN über die Vermittlungsstation V und die Basisstation B1 übermittelt. Die mobile Endeinrichtung E überwacht dabei regelmäßig die Qualität der drahtlosen Datenübertragung von bzw. zu der Basisstation B1. Verschlechtert sich diese Qualität, weil sich beispielsweise die Endeinrichtung E dem Rand der Funkzelle FZ1 nähert, versucht die mobile Endeinrichtung E eine andere Basisstation in Funkreichweite zu finden, mit welcher eine drahtlose Kommunikation in vorgegebener Qualität möglich ist.

Fig 2 zeigt den Zustand unmittelbar nachdem eine solche Basisstation, hier die Basisstation B2, gefunden ist, d.h. nachdem die mobile Endeinrichtung E in deren Funkzelle FZ2 gelangt ist, sich aber gleichzeitig noch in der Funkzelle FZ1 befindet. In diesem Fall übermittelt die mobile Endeinrichtung E, z.B. gemäß DECT-Standard, eine sogenannte Connection-Handover-Request-Meldung zur Anforderung einer zweiten Verbindung an die Basisstation B2. Dies veranlaßt die Basisstation B2 dazu, der Vermittlungssteuerung VS ein Steuersignal S1, vorzugsweise gemäß der ETSI-Standard-Definition für Signalisierung QSIG für private Netze bzw. DSS1 für öffentliche Netze, zum Aufbau einer Dreierkonferenzschaltung zwischen den Basisstationen Bl und B2 und dem Verbindungspartner der mobilen Endeinrichtung im Kommunikationsnetz KN zu übermitteln. Eine Dreierkonferenzschaltung ist ein auch im Bereich der drahtgebundenen Kommunikation sehr gebräuchliches und standardisiertes (z.B. gemäß ETSI-Standard für ISDN) Leistungsmerkmal von Vermittlungsstationen.

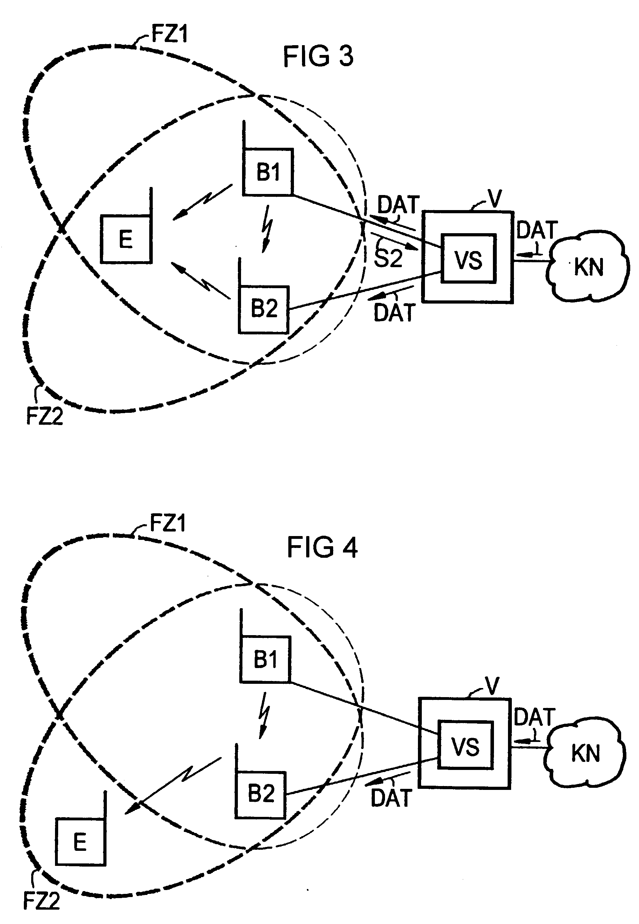

Fig 3 zeigt, wie nun im Rahmen der aufgebauten Dreierkonferenzschaltung die von der Vermittlungsstation V an die Basisstation B1 übertragenen Daten DAT auch parallel der Basisstation B2 übermittelt werden. Sobald die an die mobile Endeinrichtung E zu übertragenden Daten DAT bei beiden Basisstationen B1 und B2 vorliegen, kann die mobile Endeinrichtung E den Datenaustausch mit der Vermittlungsstation V über die Basisstation B1 abbrechen und im allgemeinen ohne Unterbrechung über die Basisstation B2 wiederaufnehmen.

Nach Abbruch des Datenaustausches über die Basisstation B1, sendet diese der Vermittlungssteuerung VS ein Steuersignal S2, vorzugsweise gemäß der ETSI-Standard-Definition für Signalisierung QSIG für private Netze bzw. DSS1 für öffentliche Netze, zum Herausschalten aus der Dreierkonferenz. Dies kann im einfachsten Fall durch ein Steuersignal erfolgen, das üblicherweise ein Auflegen eines Teilnehmers anzeigen würde. Auch Leistungsmerkmale zum Herausschalten aus einer Dreierkonferenz sind bei Vermittlungsstationen sehr gebräuchlich und auch für drahtgebundene Kommunikation vielfach standardisiert, wie z.B. in ETSI-Standards für ISDN.

Fig 4 zeigt den Zustand nachdem die Basisstation B1 aus der Dreierkonferenz herausgeschaltet ist. In dieser Phase wird nur noch die Basisstation B2 von der Vermittlungsstation V mit den zu übertragenden Daten DAT versorgt und es besteht aus Sichtweise der Vermittlungsstation V nur noch eine Zweipunktverbindung. Der Handover-Vorgang ist damit abgeschlossen und die mobile Endeinrichtung kann die Funkzelle FZ1 der Basisstation B1 unter Erhalt der Verbindung verlassen.

## Patentansprüche

1. Verfahren zum unterbrechungsfreien Wechsel einer von einer Vermittlungsstation (V) über eine erste daran gekoppelte Basisstation (B1) drahtlos zu einer mobilen Endeinrichtung (E) geführten Verbindung zum Verlauf über eine zweite an die Vermittlungsstation (V) gekoppelte Basisstation (B2) zur mobilen Endeinrichtung (E), mit folgenden Schritten:
a) wird bei bestehender Verbindung über die erste Basisstation (B1) erkannt, daß eine drahtlose Datenübertragung zwischen mobiler Endeinrichtung (E) und erster Basisstation (B1) nicht mehr einem vorgegebenen Qualitätskriterium entspricht, und befindet sich eine zweite Basisstation (B2) in Funkreichweite der mobilen Endeinrichtung (E), zu der eine drahtlose Datenübertragung in vorgegebener Qualität möglich ist, so wird
b) durch Übermitteln eines dazu vorgesehenen Steuersignals (S1) von einer Basisstation an die Vermittlungsstation (V) mindestens ein auch für drahtgebundene Kommunikation vorgesehenes Leistungsmerkmal der Vermittlungsstation (V) zum parallelen Übertragen von Daten an mehrere Übertragungsziele in einer Weise aktiviert, daß die der mobilen Endeinrichtung (E) im Rahmen der Verbindung zu übermittelnden Daten (DAT) von der Vermittlungsstation außer an die erste Basisstation (B1) auch an die zweite Basisstation (B2) übertragen werden, und
c) nachdem die der mobilen Endeinrichtung (E) zu übermittelnden Daten bei beiden Basisstationen (B1, B2) vorliegen, beendet die mobile Endeinrichtung (E) einen über die erste Basisstation (B1) verlaufenden Datenaustausch mit der Vermittlungsstation (V), um ohne Unterbrechung einer Datenübertragung den Datenaustausch mit der Vermittlungsstation (V) über die zweite Basisstation (B2) fortzusetzen, woraufhin
d) durch Übermittlung eines weiteren Steuersignals (S2) von einer Basisstation an die Vermittlungsstation (V) die Datenübertragung von der Vermittlungsstation (V) an die erste Basisstation (B1) beendet wird, so daß in Folge nur noch die zweite Basisstation (B2) mit den an die mobile Endeinrichtung (E) zu übertragenden Daten (DAT) versorgt wird.

2. Verfahren nach Anspruch 1,
**dadurch gekennzeichnet,**
daß zum parallelen Übertragen von Daten (DAT) an mehrere Übertragungsziele das Leistungsmerkmal für eine Dreierkonferenzschaltung in der Vermittlungsstation (V) aktiviert wird.

3. Verfahren nach Anspruch 2,
**dadurch gekennzeichnet,**
daß zum Beenden der von der Vermittlungsstation (V) an die erste Basisstation (B1) erfolgenden Datenübertragung die erste Basisstation aus der Dreierkonferenz herausgeschaltet wird.

4. Verfahren nach Anspruch 1,
**dadurch gekennzeichnet,**
daß zum parallelen Übertragen von Daten (DAT) an mehrere Übertragungsziele das Leistungsmerkmal für eine Punkt-zu-Mehrpunkt-Verbindung zwischen der Vermittlungsstation (V) und beiden Basisstationen (B1, B2) aktiviert wird.

5. Verfahren nach einem der vorhergehenden Ansprüche,
**dadurch gekennzeichnet,**
daß ein Datenaustausch zwischen einer Basisstation und der Vermittlungsstation (V) über mindestens eine andere an die Vermittlungsstation (V) gekoppelte Basisstation geführt wird.

6. Verfahren nach einem der vorhergehenden Ansprüche,
**dadurch gekennzeichnet,**
daß ein Austausch von Signalen zwischen erster Basisstation (B1) und zweiter Basisstation (B2) zur zeitlichen Synchronisierung der Basisstationen (B1, B2) verwendet wird.

7. Verfahren nach Anspruch 5 oder 6,
**dadurch gekennzeichnet,**
daß ein Austausch von Daten und/oder Signalen zwischen Basisstationen (B1, B2) drahtlos erfolgt.
